# EUROPEAN PATENT SPECIFICATION

(11) **EP 4 465 239 B1**
(45) Date of publication and mention of the grant of the patent: **09.12.2026**
(21) Application number: 23173791.7
(22) Date of filing: 16.05.2023
(51) Int. Cl.: G06T 7/20

(54) **A METHOD AND SYSTEM FOR TRACKING A PIXEL IN A VIDEO**
VERFAHREN UND SYSTEM ZUR VERFOLGUNG EINES PIXELS IN EINEM VIDEO
PROCÉDÉ ET SYSTÈME DE SUIVI D'UN PIXEL DANS UNE VIDÉO

(43) Date of publication of application: 20.11.2024
(73) Proprietor: TOYOTA JIDOSHA KABUSHIKI KAISHA, Toyota-shi, Aichi-ken, 471 8571 (JP); Czech Technical University in Prague, 16627 Praha 6 (CZ)
(72) Inventor: CHUMERIN, Nikolay, 1140 BRUSSELS (BE); SERYCH, Jonas, 16627 PRAGUE 6 (CZ); NEORAL, Michal, 16627 PRAGUE 6 (CZ); MATAS, Jiri, 16627 PRAGUE 6 (CZ)
(74) Representative: Cabinet Beau de Loménie

(56) References cited:
- US-A1- 2015 379 728
- CONZE PIERRE-HENRI ET AL: "Multi-reference combinatorial strategy towards longer long-term dense motion estimation", COMPUTER VISION AND IMAGE UNDERSTANDING, ACADEMIC PRESS, US, vol. 150, 20 May 2016 (2016-05-20), pages 66 - 80, XP029628348, ISSN: 1077-3142, DOI: 10.1016/J.CVIU.2016.04.013
- CONZE PIERRE-HENRI ET AL: "Dense long-term motion estimation via statistical multi-step flow", 2014 INTERNATIONAL CONFERENCE ON COMPUTER VISION THEORY AND APPLICATIONS (VISAPP), SCITEPRESS, vol. 3, 5 January 2014 (2014-01-05), pages 545 - 554, XP032792223
- CONZE PIERRE-HENRI ET AL: "Dense motion estimation between distant frames: Combinatorial multi-step integration and statistical selection", 2013 IEEE INTERNATIONAL CONFERENCE ON IMAGE PROCESSING, IEEE, 15 September 2013 (2013-09-15), pages 3860 - 3864, XP032966355, DOI: 10.1109/ICIP.2013.6738795

## Description

### BACKGROUND OF THE INVENTION

### 1. Field of the invention

The present disclosure relates to the field of computer vision, and more particularly to a method for tracking at least one pixel from a reference frame to a current frame in a video. The method may find applications in all kinds of industries, including the automotive industry, video editing, motion estimation or tracking, 2D or 3D reconstruction, camera autocalibration, etc.

### 2. Description of Related Art

Optical flow estimation is a computer vision task aiming to determine the movement of pixels throughout a video. Reliable dense optical flow estimation has a significant enabling potential for diverse advanced computer vision applications, including structure-from-motion, video editing, and augmented reality. Optical flows may be used between consecutive frames for motion estimation in videos, but this does not enable to generate consistent and dense long-range motion trajectories for the pixels.

The following references disclose various methods relating to the field of optical flow estimation:
[REF. 1] Daniel J Butler, Jonas Wulff, Garrett B Stanley, and Michael J Black. A naturalistic open source movie for optical flow evaluation. In Computer Vision-ECCV 2012: 12th European Conference on Computer Vision, Florence, Italy, October 7-13, 2012, Proceedings, Part VI 12, pages 611- 625. Springer, 2012.
[REF. 2] Peter J Huber. Robust estimation of a location parameter. Breakthroughs in statistics: Methodology and distribution, pages 492-518, 1992.
[REF. 3] Zachary Teed and Jia Deng. RAFT: Recurrent all-pairs field transforms for optical flow. In European Conference on Computer Vision, pages 402-419. Springer, 2020.
[REF. 4] Conze Pierre-Henri et al. Multi-reference combinatorial strategy towards longer long-term dense motion estimation. In Computer Vision and Image Understanding, Academic Press, US, vol. 150, 20 May 2016, pages 66-80, ISSN: 1077-3142, DOI: 10.1016/J.CVIU.2016.04.013
Furthermore, US 2015/379728 & [REF. 4] disclose a tracking method according to the preamble of claim 1.

### SUMMARY

A simple baseline method for tracking one or more pixels (e.g. obtaining point-to-point correspondences) in a video concatenates interpolated optical flow to form trajectories of a pixel, i.e. the set of projections of the pre-image of the pixel, for all frames in a sequence. However, such an approach suffers from several problems: error accumulation leading to drift, sensitivity to occlusion and non-robustness, since a single poorly estimated optical flow damages the long-term correspondences for future frames. This results in trajectories that quickly diverge and become inconsistent, particularly in complex scenes involving large motions, repetitive patterns and illumination changes, such as driving scenes. Additionally, concatenated optical flow between consecutive frames cannot recover trajectories after temporary occlusions.

Another baseline approach, namely matching every frame with a reference, is neither prone to drift nor occlusions, but has other weaknesses: as the time and therefore often pose and illumination conditions change in the sequence, the matching problem becomes progressively more difficult. In the inventors' experiments, the match-to-reference method performed worse than consecutive frame optical flow concatenation.

The object of the present invention is to at least substantially remedy the above-mentioned drawbacks.

In this respect, the present disclosure relates to a computer-implemented method for tracking at least one pixel from a reference frame to a current frame in a video, as defined in claim 1.

For conciseness, the method is referred to hereinafter as the tracking method.

The at least one pixel comprises one pixel or a plurality of pixels. As used herein, for conciseness and unless the context indicates otherwise, "a", "an", and "the" are intended to refer to "at least one" or "each" and to include plural forms as well. Conversely, generic plural forms include the singular.

The video includes a sequence of frames, e.g. a sequence of images, at any desired regular or irregular sampling rate. The reference frame is a given frame of the video which may be the first (e.g. earliest) frame of the video, the last (e.g. latest) frame of the video, or any frame in-between. The position of the pixel in the reference frame is assumed to be known.

The current frame is another frame of the video, in which it is desired to determine the position of the pixel. The current frame is neither the reference frame nor adjacent the reference frame. The current frame may be located in the video before or after the reference frame.

The intermediate frames may stand for all the frames between the current frame and the reference frame, or only part of them. The intermediate frames may comprise frames selected to potentially serve as anchor frames (apart from the reference frame).

It is desired to track the pixel from the reference frame to the current frame. Tracking the pixel from the reference frame to the current frame does not mean that the tracking method needs to determine or even compute every position of the pixel in the intermediate frames, but only to determine the overall displacement of the pixel between the reference frame and the current frame.

The tracking method estimates a plurality of position candidates for the pixel in the current frame. Each position candidate may be built based on a respective anchor frame among the reference frame and the intermediate frames. Specifically, for a given anchor frame, the corresponding position candidate is estimated by chaining the position of the pixel in the anchor frame and an optical flow from the anchor frame to the current frame. In other words, the position of the pixel in the current frame is derived by applying or concatenating said optical flow to the position of the pixel in the anchor frame. Such position candidates may be estimated for a plurality of respective anchor frames. The number of position candidates may be less than or equal to the number of possible anchor frames, as not all of the intermediate frames and/or reference frame may be used as anchor frames.

The position of the pixel in the anchor frame may be estimated, e.g. if the anchor frame is an intermediate frame, or known, e.g. if the anchor frame is the reference frame. The optical flow from the anchor frame to the current frame may be calculated by means known per se in the art, e.g using at least one machine learning model, such as a convolutional neural network (CNN). In any case, as the anchor frame is closer to the reference frame than the current frame, the position of the pixel in the anchor frame is presumably a good springboard for estimating a position candidate for the pixel in the current frame.

Finally, the tracking method determines the position of the at least one pixel in the current frame by selecting one of the position candidates, e.g. the most likely one to represent the position of the pixel in the current frame or any suitable selection process, or by combining two or more of the position candidates, e.g. by a weighted average or any suitable combination process.

It is noteworthy that the tracking method may take into account a single possible position for the pixel in each anchor frame. Thanks to this provision, the tracking is based on previously estimated/known positions, hence a limited number of position candidates for the current frame. The method is therefore efficient.

In addition, the proposed tracking method is robust because, thanks to the plurality of position candidates, incorrect estimations in some intermediate frames can be ignored at a later frame (i.e. at the current frame) by choosing another position candidate. Accordingly, drift is reduced. This brings robustness to the tracking method, especially for long-term tracking.

The position of the at least one pixel in the anchor frame is obtained by the above-described tracking method. In other words, the tracking method is a recursive method. In this way, the obtained position of the pixel in the anchor frame is more reliable, which makes the tracking method as a whole more accurate.

The position of the at least one pixel in a frame adjacent the reference frame is obtained by chaining the known position of the at least one pixel in the reference frame and an optical flow from the reference frame to the adjacent frame. The frame adjacent the reference frame is one of the intermediate frames. Thanks to these provisions, the position of the pixel in the adjacent frame is obtained in a simple yet reliable way.

Optionally, the at least one pixel comprises a plurality of pixels.

Optionally, the estimating and determining are carried out independently for each of the at least one pixel. The tracking method may provide for pixel-level tracking in the video, as opposed to object- or feature-level tracking. This provides more flexibility for various applications, in particular as no object model is needed.

Optionally, the at least one pixel includes a dense selection of pixels of the video. Dense tracking of pixels in the video provides a more robust basis for various applications.

Optionally, the current frame and the intermediate frames serving as anchor frames are increasingly spaced from one another in a direction from the current frame to the reference frame. In doing so, the tracking method sufficiently takes into account the context of the pixel temporally close to the current frame, while also keeping a connection to long-term information in more distant frames. Yet, by selecting increasingly spaced anchor frames, the tracking method remains efficient.

Optionally, the current frame and the intermediate frames serving as anchor frames are spaced from one another in a logarithmic manner.

Optionally, the tracking method further comprising evaluating respective scores of the position candidates, and determining the position of the at least one pixel in the current frame based on the respective scores. The scores give an objective basis for selecting one of the position candidates or combining two or more of the position candidates. Each position candidate may be rated with one or more score.

For instance, optionally, the score comprises at least one of non-visibility score and an uncertainty score. The non-visibility score may quantify the likelihood of the at least one pixel not to be visible in the current frame or in the corresponding anchor frame, e.g. being occluded or out of view. The uncertainty score may quantify the uncertainty associated to the estimating of the corresponding position candidate. Thanks to these scores, the tracking method may determine the reliability of each position candidate.

Optionally, at least one of the non-visibility score and the uncertainty score is computed by a machine learning model. The machine learning model may comprise an artificial neural network, e.g. a CNN. Thanks to the machine learning model, the score(s) may be learnt, which makes the tracking method more generic.

Optionally, the determining comprises identifying a position candidate as a least likely position candidate if the non-visibility score of the position candidate indicates that the at least one pixel is not visible in the current frame or in the corresponding anchor frame. That is, when considering the plurality of position candidates, some of them may be discarded or given a low weight in the final determination. One criterion for doing so is to determine whether the position candidate corresponds to a position in which the pixel was visible in the anchor frame. If the pixel was not visible in the anchor frame (e.g. if the non-visibility score exceeds a threshold), the corresponding position is likely to be unreliable. As a consequence, the tracking method may identify such a position candidate as a least likely position candidate based on the non-visibility score. Likewise, if the pixel is not visible in the current frame, the position candidate is likely to be unreliable and, as a consequence, the tracking method may identify such a position candidate as a least likely position candidate based on the non-visibility score. This increases the accuracy of the method. It is possible to combine non-visibility scores in the anchor frame and in the current frame, e.g. to take the most unfavorable non-visibility score into account.

Optionally, the uncertainty score is calculated based on a first uncertainty score of the position of the at least one pixel in the respective anchor frame and a second uncertainty score of the optical flow from the respective anchor frame to the current frame. Thus, the uncertainty score can reflect uncertainty relating to both the position of the pixel in the anchor frame and the optical flow. This increases the accuracy of the method.

The present disclosure further relates to a system for tracking at least one pixel, as defined in claim 10.

The system, referred to hereinafter as the tracking system, may be configured to carry out the above-mentioned tracking method, and may have part or all of the above-described features. The system may have the hardware structure of a computer.

The present disclosure further relates to a computer-implemented method for tracking at least one pixel from a reference frame to a current frame in a video comprising the reference frame, the current frame and at least one intermediate frame between the reference frame and the current frame, the at least one pixel having a known position in the reference frame, the method comprising:
- estimating a plurality of position candidates for the at least one pixel in the current frame;
- evaluating at least one of non-visibility score and an uncertainty score for each of the position candidates;
- determining the position of the at least one pixel in the current frame by selecting one of the position candidates or combining two or more of the position candidates, based on the respective scores.

This method may have part of all of the features described above in relation to the tracking method.

The present disclosure further relates to a computer program set including instructions for executing the steps of the above described tracking method when said program set is executed by one or more computers. This program set can use any programming language and take the form of source code, object code or a code intermediate between source code and object code, such as a partially compiled form, or any other desirable form.

The present disclosure further relates to a recording medium readable by at least one computer and having recorded thereon at least one computer program including instructions for executing the steps of the above described tracking method. The recording medium can be any entity or device capable of storing the program. For example, the medium can include storage means such as a ROM, for example a CD ROM or a microelectronic circuit ROM, or magnetic storage means, for example a diskette (floppy disk) or a hard disk.

Alternatively, the recording medium can be an integrated circuit in which the program is incorporated, the circuit being adapted to execute the tracking method or to be used in its execution.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
- Fig. 1 is a block diagram of a tracking system according to an embodiment;
- Fig. 2 is a flowchart of a tracking method according to an embodiment;
- Fig. 3 is a diagram illustrating an overall principle of the tracking method according to an embodiment.

### DETAILED DESCRIPTION OF EMBODIMENTS

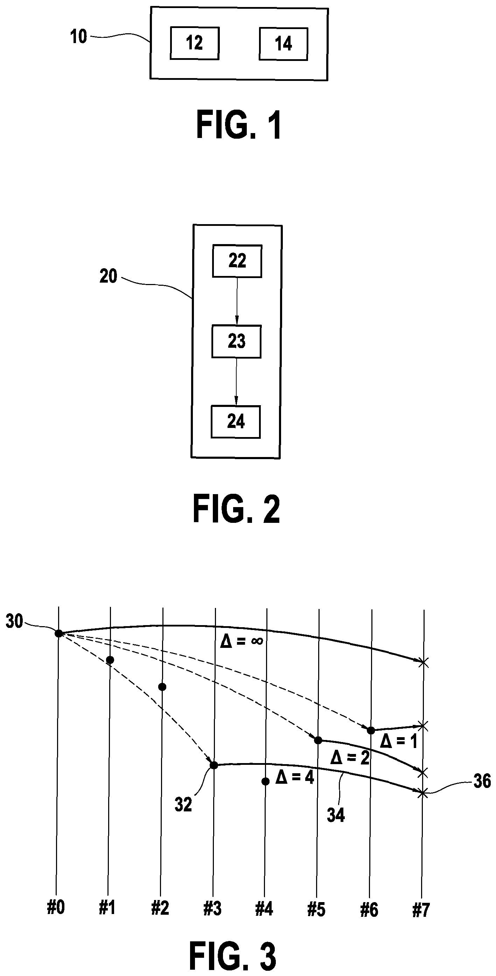

Figure 1 shows a block diagram of a tracking system 10 comprising an estimating module 12 and a determining module 14 according to embodiments of the present disclosure. The tracking system 10 is a system for tracking at least one pixel from a reference frame to a current frame in a video comprising the reference frame, the current frame and at least one intermediate frame between the reference frame and the current frame, the at least one pixel having a known position in the reference frame.

The tracking system 10 may comprise an electronic circuit, a processor (shared, dedicated, or group), a combinational logic circuit, a memory that executes one or more software programs, and/or other suitable components that provide the described functionality. In other words, the tracking system 10 may be a computer device. The tracking system 10 may be connected to a memory, which may store data, e.g. at least one computer program which when executed, carries out the tracking method according to the present disclosure. In particular, the tracking system or the memory may store software which comprises the neural networks described hereinafter.

The tracking system 10 may have an input for receiving a sequence of frames, e.g. a video. In particular, the tracking system 10 may be connected to an optical sensor, in particular a digital camera. The digital camera is configured such that it can record a scene, and in particular output digital data to the tracking system 10.

If the tracking method is to be carried out in real time, the video may be acquired in real time by an image acquisition module, such as a video acquisition module, e.g. a camera or the like (video cameras, photo cameras, etc.). Alternatively or in addition, the video may be acquired beforehand, and obtained by the tracking system 10 later, e.g. in case of post-processing of the filmed process.

The estimating module 12 is a module for estimating a plurality of position candidates for the at least one pixel in the current frame, wherein each of the position candidates is obtained by chaining a position of the at least one pixel in a respective anchor frame with an optical flow from the respective anchor frame to the current frame. The anchor frame is chosen among the reference frame and the at least one intermediate frame.

The estimating module 12 may be implemented as software running on the tracking system 10 or as a hardware element of the tracking system 10. The estimating module 12 estimates a plurality of position candidates for at least one pixel in a current frame of the video.

The determining module 14 is a module for determining the position of the at least one pixel in the current frame by selecting one of the position candidates or combining two or more of the position candidates.

The determining module 14 may be implemented as software running on the tracking system 10 or as a hardware element of the tracking system 10. In particular, the tracking system 10 may comprise a program which includes both the estimating module 12 and the determining module 14. Alternatively the estimating module 12 may be realized as an independent program (in particular beside a program forming the determining module 14).

The tasks carried out by the tracking system 10 are detailed hereinafter with respect to a corresponding tracking method, an embodiment of which is illustrated in Fig. 2.

Figure 2 is a flowchart of a tracking method 20 according to an embodiment. As indicated above, the tracking method 20 is a method for tracking at least one pixel from a reference frame to a current frame in a video, assuming that the at least one pixel has a known position in the reference frame. The tracking method 20 may be used for long-term tracking of every pixel of a reference frame throughout a video.

The tracking method 20 comprises a step 22 of estimating a plurality of position candidates for the at least one pixel in the current frame, wherein each of the position candidates is obtained by chaining a position of the at least one pixel in a respective anchor frame with an optical flow from the respective anchor frame to the current frame, wherein the anchor frame is chosen among the reference frame and the at least one intermediate frame.

That is, the estimating step 22 relies on a plurality of optical flow fields computed over different time spans (e.g. from different anchor frames). Therefore, in the present disclosure, the tracking method 20 may also be referred to as Multi-Flow Tracker or MFT in short.

The principles of the estimating step 22 are illustrated in Fig. 3. Figure 3 shows an example in which a video comprises 8 frames numbered from frame #0 to frame #7. Although generally two-dimensional, the frames are represented in one dimension (i.e. as a line) in Fig. 3 for simplicity.

In this example, frame #0 is chosen as the reference frame, and it is desired to track at least one pixel of reference frame #0 to frame #7, which is thus the current frame. Intermediate frames #1 to #6 separate the reference frame #0 from the current frame #7. As mentioned above, the number of frames of the video could vary, the reference frame needs not be the first frame, the current frame needs not be the last frame, and the reference frame needs not precede the current frame.

The estimating step 22 considers a plurality of anchor frames different from the current frame #7, e.g. the reference frame #0 and intermediate frames #3, #5 and #6.

The frame difference between the current frame #7 and each anchor frame is noted as Δ. For instance, for intermediate frame #6, Δ=1. For intermediate frame #3, Δ=4. Δ=∞ is used to refer to the difference between the current frame #7 and the reference frame #0, which is by construction the anchor frame farthest to the current frame #7 in the sequence of frames to track.

In order to give more weight to neighboring frames than to distant frames, the current frame #7 and the intermediate frames #6, #5, #3 serving as anchor frames may be increasingly spaced from one another in a direction from the current frame #7 to the reference frame #0. In this example, the current frame #7 and the intermediate frames #6, #5, #3 may be logarithmically spaced from one another, i.e. the frame difference Δ increases exponentially (here as 2ⁿ). The reference frame #0 may be included in the anchor frames or not irrespective of the increasing or logarithmical spacing of the intermediate frames.

A position of the tracked pixel is assumed to be known in each anchor frame. In the reference frame #0, the position 30 of the pixel is known of course; however, for the other anchor frames #3, #5, #6, the position 32 of the pixel may be estimated or otherwise obtained. For instance, the position of the pixel in frame #1 adjacent the reference frame #0 may be obtained by chaining the known position of the pixel in reference frame #0 and an optical flow from reference frame #0 to the adjacent frame #1. Position of the pixel in subsequent frames #2, #3, etc. may be obtained likewise from the position in the adjacent frame #1, by considering pairs of consecutive frames. However, advantageously, the position 32 of the pixel in an intermediate frame may be obtained in a recursive manner by applying the tracking method 20 itself to a fewer number of frames (because the current frame #7 is excluded). An iterative implementation will be detailed hereinafter.

In Fig. 3, the known position 30 or estimated position 32 of the pixel in every frame, or at least in every one of the anchor frames, is represented as a dot. A dashed arrow illustrates the overall displacement from reference frame #0 to the corresponding anchor intermediate frame #3, #5, #6, irrespective of whether this overall displacement was obtained as a direct single displacement or through a plurality of shorter displacements.

For every anchor frame, given the position of the pixel in this anchor frame, the estimating step 22 chains said position with an optical flow 34 from the respective anchor frame to the current frame #7. The optical flow 34 is represented in Fig. 3 as a solid arrow. An example of chaining will be detailed hereinafter.

As can be seen in Fig. 3, for each anchor frame #0, #3, #5, #6, the chaining may lead to a different position candidate 36 in the current frame #7. Thus, a plurality of position candidates 36 for the pixel in the reference frame can be estimated, here four position candidates 36. This shows how one position candidate per anchor frame can be obtained.

With reference to Fig. 2, the tracking method 20 further comprises a step 24 of determining the position of the at least one pixel in the current frame by selecting one of the position candidates or combining two or more of the position candidates. Determining step 24 corresponds to a processing of the plurality of position candidates to determine the predicted position of the pixel in the current frame.

Optionally, the tracking method 20 further comprises a step 23 of evaluating respective scores of the position candidates. Then, in step 24, the determining may be based on the respective scores.

Although described in connection with one pixel, the tracking method 20 may apply to a plurality of pixels, e.g. a dense selection of pixels of the video (as opposed to a sparse selection of pixels). As the case may be, the estimating step 22 and determining step 24 (and, if applicable, the evaluating step 23) may be carried out independently for each of the at least one pixel.

A detailed example is now described for illustration purposes. Although described with respect to all pixels and all frames, it is clear that the tracking method according to this embodiment adapts to some pixels only, and/or some frames only.

Given a sequence of *H* × *W* -sized (Height times Width) video frames *I*₀*, I*₁*, ..., I_{N}* and a list of positions on the reference (template) frame ***p***_{*i,*0} *=* (*xᵢ, yᵢ*)*, i* ∈ [0*, HW*], the tracking method predicts the corresponding positions *p_{i,t}* in all the other frames *t* ∈ [1, *N*], together with at least one score, here a non-visibility (including occlusion) flag *o_{i,t}.* As discussed above, at frame *t,* the position candidates are formed by combining the MFT result (or more generally an otherwise obtained position) from a previous frame *t* - Δ, with the flow from *t* - Δ to the current frame *t.* MFT constructs a set of position candidates, each with a different Δ, then the best candidate is chosen independently for each pixel of the reference frame. To rank the candidates, MFT computes scores such as a non-visibility score and/or an uncertainty score, and propagates a non-visibility map and an uncertainty map in addition to the optical flow fields.

As indicated above, at least one of the non-visibility score and the uncertainty score may be computed by a machine learning model, optionally by a CNN. Specifically, current optical flow methods typically compute the flow from a cost-volume inner representation and image features. Given a pair of input images, *Iₐ* and *I_{b},* the cost-volume encodes similarity between each position in *Iₐ* and (possibly a subset of) positions in *I_{b}.* The cost-volume may be re-used as an input to two CNNs for non-visibility and uncertainty estimation. In either or both cases, the CNN may use two convolutional layers with kernel size 3. In an example, the first layer has 128 output channels and ReLU activation. Both networks take the same input as the flow estimation head and each network outputs a *H* × *W* map.

Non-visibility prediction may be formulated as a binary classification. The machine learning model should output 1 for any point in *Iₐ* that is not visible (e.g. occluded or out of view) in *I_{b}* and 0 otherwise. The non-visibility CNN with two output channels may be followed by soft-max. During inference, the second output channel may be used as the predicted non-visibility score. The non-visibility model may be trained on datasets with non-visibility ground-truth labels (e.g. Sintel [REF. 1]) using standard crossentropy loss.

The uncertainty model may be trained with the following uncertainty loss function: ${L}_{u} = \frac{1}{2 {σ}^{2}} {l}_{H} \left({\left‖\vec{x}-\vec{x}*\right‖}_{2}\right) + \frac{1}{2} log \left({σ}^{2}\right)$ (1) where *x* is the predicted flow, *x** the ground truth flow, *σ*² the predicted uncertainty and *l_{H}* is the Huber loss function [REF. 2]. The uncertainty CNN predicts *α* = log (*σ*²) to improve numerical stability during training, however *σ*² is output during inference.

In this embodiment, the proposed method sums the non-visibility loss and 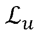 weighted by $\frac{1}{5}$. The non-visibility and uncertainty networks may be trained separately while keeping the pre-trained optical flow fixed.

However, other training settings are envisaged, including other loss functions. Besides, the scores may be defined differently, so long as the non-visibility score qualifies whether the pixel is visible or not in the frame and the uncertainty score quantifies a level of confidence in the position prediction. Note that taking non-visibility into account enables to make up for some optical flow networks' ability to track an occluder pixel rather than the occluded pixel, which may introduce drift. Specifically, some optical flow networks can track a pixel even when the pixel is occluded in a subsequent frame, e.g. by considering the motion of the surrounding pixels. While this may be beneficial when tracking only between consecutive frames, it introduces drift when the position in the subsequent frame is used for tracking in further frames.

Turning to the tracking method 20 per se, the MFT may be initialized with the reference frame of a video, noted as frame 0. It may then output a triplet *F̅O̅U̅*_{0→*t*} = (***F̅***_{0→}*ₜ, **O̅***_{0→}*ₜ, **U̅***_{0→*t*}) for each subsequent frame *Iₜ* (towards the current frame, i.e. either forward or rearward). That is, for each frame and each pixel of the reference frame, the MFT outputs an optical flow, a non-visibility score and an uncertainty score.

Specifically, the ***F̅***_{0→*t*} may be a *H* × *W* × 2 map of position differences between frame 0 and frame *t,* e.g. in the conventional optical flow format. The ***O̅***_{0→*t*} and ***U̅***_{0→*t*} may be *H* × *W* maps with the current non-visibility and uncertainty scores respectively. On the initialization frame, all three maps contain zeros only (no motion, all pixels visible, no uncertainty), on the first frame after initialization, the triplet is directly the output of the optical flow network and the non-visibility and uncertainty CNNs. On all the following frames, the results are not the direct outputs of the network, but instead they are formed by chaining two (***F***, ***O***, ***U***) triplets together, e.g. as described below.

The MFT is parameterized by *D,* a set of time (or number of frames) deltas. Let *D* be defined as *D* = {∞,1,2,4,8,16,32} by default. However, other (possibly increasingly spaced) deltas may be selected, in an exponential manner or not. Besides, Δ=∞ may be included or non in *D.* The set *D* defines which frames will serve as the anchor frames.

For every Δ ∈ *D,* the method estimates a result candidate (including a position candidate and the associated scores) that is formed by chaining two parts: a previously computed result ***F̅O̅U̅***_{0→(*t-*Δ)} and a network output ***FOU***_{(*t-*Δ)→*t*} as shown in Fig. 3. To keep notation simple, (*t* - Δ) stands for max ( 0*, t* - Δ) to avoid invalid negative frame numbers.

To do the chaining, a new map ***P̅***_{(*t-*Δ)} is defined for storing the pixel positions in frame (*t* - Δ)*.* For each position ***p** =* (*x, y*) in the reference frame, the position in frame (*t* - Δ) is calculated as ${\overline{P}}_{\left(t-Δ\right)} \left[p\right] = p + {\overline{F}}_{0 \to \left(t-Δ\right)} \left[p\right]$ (2) where ***A***[***b***] means the value in a map ***A*** at integer spatial coordinates ***b**.* To form the candidate ${F}_{0 \to t}^{Δ}$*,* the optical flow ***F***_{(*t-*Δ)→}*ₜ,* sampled at the appropriate position, is added to the motion between frames 0 and (*t* - Δ). In other words, the position candidate is obtained by chaining a position of the at least one pixel in a respective anchor frame with an optical flow from the respective anchor frame to the current frame: ${F}_{0 \to t}^{Δ} \left[p\right] = {\overline{F}}_{0 \to \left(t-Δ\right)} \left[p\right] + {F}_{\left(t-Δ\right) \to t} {\left[{\overline{P}}_{\left(t-Δ\right)}\left[p\right]\right]}_{s}$ (3) where ***A***[***b***]*ₛ* means the value in a map ***A*** sampled at possibly non-integer spatial coordinates ***b*** with bilinear interpolation. Bilinear interpolation (e.g. in height and width) may be needed to sample the flow field, since the calculated positions may not align with the pixel grid.

Chaining two non-visibility scores may include taking their maximum, e.g. as follows: ${O}_{0 \to t}^{Δ} \left[p\right] = max \left({\overline{O}}_{0 \to \left(t-Δ\right)}\left[p\right];{O}_{\left(t-Δ\right) \to t}{\left[{\overline{P}}_{\left(t-Δ\right)}\left[p\right]\right]}_{s}\right)$ (4)

Since the non-visibility score may be ultimately compared to a threshold to get a binary decision, equation (4) corresponds to a "or" operation - the chain is declared non-visible whenever at least one of its parts is not visible.

Besides, the uncertainty score may be calculated based on a first uncertainty score of the position of the at least one pixel in the respective anchor frame and a second uncertainty score of the optical flow from the respective anchor frame to the current frame. Specifically, the uncertainty scores may be chained by linear combination or merely addition, like the optical flows, because the uncertainty scores, e.g. flow error variance estimates, were estimated independently: ${U}_{0 \to t}^{Δ} \left[p\right] = {\overline{U}}_{0 \to \left(t-Δ\right)} \left[p\right] + {U}_{\left(t-Δ\right) \to t} {\left[{\overline{P}}_{\left(t-Δ\right)}\left[p\right]\right]}_{s}$ (5)

The chaining procedure is repeated for each Δ ∈ *D* to obtain up to |*D*| different result candidates. Finally, the determining step 24 selects the best Δ, noted as Δ*, according to the scores, namely the candidate uncertainty and non-visibility maps. In particular, the determining comprises identifying a position candidate as a least likely position candidate if the non-visibility score of the position candidate indicates that the at least one pixel is not visible in the current frame or in the corresponding anchor frame.

Thus, in an example, MFT picks the Δ that results in the lowest uncertainty score among the visible candidates. When all the candidates are non-visible (non-visibility score larger than a threshold *θₒ*), all candidates are equally good and any one, e.g. the first one, may be selected. The threshold may be set as *θₒ* = 0.02, but may be adapted empirically. ${Δ}^{∗} \left[p\right] = {argmin}_{Δ ∈ D} {U}_{0 \to t}^{Δ} \left[p\right] + ∞ ⋅ \left[\left[{O}_{0 \to t}^{Δ}\left[p\right]>{θ}_{o}\right]\right]$ (6) where [[*x*]] is the Iverson bracket (equal to 1 when condition *x* holds, 0 otherwise). In equation (6), the infinity sign means that non-visible candidates are infinitely worse than visible candidates, which amounts to identifying them as least likely candidates. Notice that the Δ*, and thus the best position candidate, is selected independently for each pixel. In determining Δ*, MFT selects the anchor frame through which the best position candidate is determined.

In an example with *D* = {∞, 1}, the flows are computed either directly between the template (i.e. the reference frame) and the current frame (Δ = ∞), or from the previous to the current frame (Δ = 1). For some parts of the image, it is better to use Δ = ∞, because having a direct link to the reference frame does not introduce drift. On the other hand, on some parts of the image the appearance might have significantly changed over the longer time span, making the direct flow not reliable at the current frame. In such case a long chain of Δ = 1 flows might be preferred. Note that MFT usually switches back and forth between the used deltas during the tracking. A single pixel of the reference frame might be tracked using a chain of Δ = 1 flows for some time, then it might switch to the direct Δ = ∞ flow for some frames (possibly undoing any accumulated drift), then back to Δ = 1 and so on.

The final result at current frame *t* may be formed by selecting the result from the candidate corresponding to Δ* in each pixel, i.e. for the flow output ***F̅***_{0→*t*} : ${\overline{F}}_{0 \to t} \left[p\right] = {F}_{0 \to t}^{{Δ}^{∗} \left[p\right]} \left[p\right]$ (7)

As an alternative, instead of selecting one of the position candidates, the determining step 24 may combine two or more of the position candidates. For instance, the determining step 24 may discard the position candidates having a non-visibility score reaching the threshold, and may calculate an average of the remaining position candidates. The average may be weighted by the respective uncertainty scores.

Finally, MFT memorizes and outputs the resulting triplet ***F̅O̅U̅***_{0→*t*} and may discard memorized results that will no longer be needed (more than max (*D* \ {∞}) frames old). Given query positions ***p***_{***i***,0} on the reference frame 0, their current positions and non-visibility scores may be computed by bilinear interpolation of the ***F̅O̅U̅*** result. ${p}_{i , t} = {p}_{i , 0} + {\overline{F}}_{0 \to t} {\left[{p}_{i , 0}\right]}_{s}$ (8) ${o}_{i , t} = {\overline{O}}_{0 \to t} {\left[{p}_{i , 0}\right]}_{s}$ (9)

In an implementation example, the optical flow computation uses the official RAFT [REF. 3] implementation with author-provided weights. Both the non-visibility and the uncertainty CNNs may operate on the same inputs as the RAFT flow regression CNN, i.e. samples from the RAFT cost-volume, context features, and Conv-GRU outputs.

The optical flows and the scores can be pre-computed offline. When the Δ = ∞ is not included in *D*, i.e. when the reference frame is not selected as an anchor frame, the number of pre-computed flow fields needed to be stored in order to be able track forward or backward from any frame in a video having *N* frames is less than *N*2|*D*|*.* Precomputing flows for Δ = ∞ (i.e. direct flow from template to current frame) and all possible template frames (e.g. template being the first frame of the video, then the fifth frame, then the tenth frame, etc.) is not practical, as the number of stored flow fields grows quadratically with the number of frames *N*. With the flows for other Δs pre-computed, MFT needs to compute just one optical flow per frame during inference, so the tracking speed stays reasonably fast, as the slowest part of the method, namely the optical flow computation, has been prepared beforehand.

The inventors have investigated the influence of using different sets *D* of deltas Δ, namely the five following sets: (1) D={1} ; (2) D={∞} ; (3) D={∞,1} ; (4) D={∞,1,2,4,8,16,32} ; (5) D={1,2,4,8,16,32}. Set (4), which corresponds to the full MFT method exemplified above, achieves the overall best results, with a plurality of appropriate metrics. Experiment (5) works without the direct flow (i.e. without Δ=∞). This means that all the optical flows needed to track from any frame in any time direction can be pre-computed and stored in storage space proportional to the number of frames 2*N*|*D*|*.* Attempting to do that with ∞ ∈ *D* would result in storage requirements proportional to *N*²*.* The last version (5) achieves second best overall performance. The third version (3) already achieves significant improvement over (1) and (2); this version may be seen as a lightweight variant that only computes two optical flow fields on each frame and provides good performance-speed tradeoff.

Experiments further revealed that the proposed tracking method outperforms start-of-the-art tracking methods by a large margin, except for isolated cases where prior art methods may perform slightly better.

Although the present disclosure refers to specific exemplary embodiments, modifications may be provided to these examples without departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense.

## Claims

1. A computer-implemented method (20) for tracking at least one pixel from a reference frame (#0) to a current frame (#7) in a video comprising the reference frame (#0), a frame (#1) adjacent the reference frame, the current frame (#7) and at least one intermediate frame (#2-#6) between the frame (#1) adjacent the reference frame (#0) and the current frame (#7), the at least one pixel having a known position (30) in the reference frame (#0), the method (20) comprising:
- estimating (22) a plurality of position candidates (36) for the at least one pixel in the current frame (#7), wherein each of the position candidates (36) is obtained by concatenating a position (32) of the at least one pixel in a respective anchor frame with an optical flow (34) from the respective anchor frame to the current frame (#7), wherein, for each of the plurality of position candidates, a different anchor frame (#0, #3, #5, #6) is chosen from among the reference frame (#0), a frame (#1) adjacent the reference frame (#0) and the at least one intermediate frame (#2-#6), and;
- determining (24) the position of the at least one pixel in the current frame (#7) by selecting one of the position candidates (36) or combining two or more of the position candidates (36),
**characterized in that** the position (32) of the at least one pixel in the frame (#1) adjacent the reference frame (#0) is obtained by concatenating the known position (30) of the at least one pixel in the reference frame (#0) with an optical flow from the reference frame (#0) to the adjacent frame (#1), and
**in that** the position (32) of the at least one pixel in the anchor frame is obtained by recursively carrying out the steps of estimating (22) and determining (24) with the anchor frame input as the current frame.

2. The method of claim 1, wherein the at least one pixel comprises a plurality of pixels, and wherein the estimating (22) and determining (24) are carried out independently for each of the at least one pixel.

3. The method of any one of claims 1 to 2, wherein the at least one pixel includes a dense selection of pixels of the video.

4. The method of any one of claims 1 to 3, wherein the current frame (#7) and the intermediate frames serving as anchor frames (#3, #5, #6) are increasingly spaced from one another in a direction from the current frame (#7) to the reference frame (#0), optionally in a logarithmic manner.

5. The method of any one of claims 1 to 4, further comprising evaluating (23) respective scores of the position candidates (36), and determining the position of the at least one pixel in the current frame based on the respective scores.

6. The method of claim 5, wherein the score comprises at least one of non-visibility score and an uncertainty score.

7. The method of claim 6, wherein at least one of the non-visibility score and the uncertainty score is computed by a machine learning model, optionally by a convolutional neural network.

8. The method of claim 6 or 7, wherein the determining comprises identifying a position candidate (36) as a least likely position candidate if the non-visibility score of the position candidate indicates that the at least one pixel is not visible in the current frame (#7) or in the corresponding anchor frame (#3, #5, #6).

9. The method of any one of claims 6 to 8, wherein the uncertainty score is calculated based on a first uncertainty score of the position (32) of the at least one pixel in the respective anchor frame and a second uncertainty score of the optical flow (34) from the respective anchor frame to the current frame (#7).

10. A system (10) for tracking at least one pixel from a reference frame (#0) to a current frame (#7) in a video comprising the reference frame (#0), a frame (#1) adjacent the reference frame, the current frame (#7) and at least one intermediate frame (#2-#6) between the frame (#1) adjacent the reference frame (#0) and the current frame (#7), the at least one pixel having a known position (30) in the reference frame (#0), the system (10) comprising:
- an estimating module (12) for estimating a plurality of position candidates (36) for the at least one pixel in the current frame (#7), wherein each of the position candidates (36) is obtained by concatenating a position (32) of the at least one pixel in a respective anchor frame with an optical flow (34) from the respective anchor frame to the current frame (#7), wherein, for each of the plurality of position candidates, a different anchor frame (#0, #3, #5, #6) is chosen from among the reference frame (#0), a frame (#1) adjacent the reference frame (#0) and the at least one intermediate frame (#2-#6), and;
- a determining module (14) for determining the position of the at least one pixel in the current frame (#7) by selecting one of the position candidates (36) or combining two or more of the position candidates (36),
**characterized in that** the position (32) of the at least one pixel in the frame (#1) adjacent the reference frame (#0) is obtained by concatenating the known position (30) of the at least one pixel in the reference frame (#0) with an optical flow from the reference frame (#0) to the adjacent frame (#1), and
**in that** the position (32) of the at least one pixel in the anchor frame is obtained by recursively carrying out the estimating of the estimating module (12) and the determining of the determining module (14) with the anchor frame input as the current frame.

11. A computer program set including instructions for executing the steps of the method of any one of claims 1 to 9 when said program set is executed by at least one computer.

12. A recording medium readable by at least one computer and having recorded thereon at least one computer program including instructions for executing the steps of the method of any one of claims 1 to 9.

## Patentansprüche

1. Computerumgesetztes Verfahren (20) zum Verfolgen mindestens eines Pixels von einem Referenzeinzelbild (#0) bis zu einem aktuellen Einzelbild (#7) in einem Video, welches das Referenzeinzelbild (#0), ein an das Referenzeinzelbild angrenzendes Einzelbild (#1), das aktuelle Einzelbild (#7) und mindestens ein dazwischenliegendes Einzelbild (#2-#6) zwischen dem an das Referenzeinzelbild (#0) angrenzenden Einzelbild (#1) und dem aktuellen Einzelbild (#7) umfasst, wobei das mindestens eine Pixel eine bekannte Position (30) in dem Referenzeinzelbild (#0) aufweist, wobei das Verfahren (20) umfasst:
- Schätzen (22) einer Vielzahl von Positionskandidaten (36) für das mindestens eine Pixel in dem aktuellen Einzelbild (#7), wobei jeder der Positionskandidaten (36) durch Verketten einer Position (32) des mindestens einen Pixels in einem jeweiligen Ankereinzelbild mit einem optischen Verlauf (34) von dem jeweiligen Ankereinzelbild bis zu dem aktuellen Einzelbild (#7) erzielt wird, wobei für jeden der Vielzahl von Positionskandidaten ein anderes Ankereinzelbild (#0, #3, #5, #6) aus dem Referenzeinzelbild (#0), einem an das Referenzeinzelbild (#0) angrenzenden Einzelbild (#1) und dem mindestens einen dazwischenliegenden Einzelbild (#2-#6) ausgewählt wird; und
- Bestimmen (24) der Position des mindestens einen Pixels in dem aktuellen Einzelbild (#7) durch Auswählen eines der Positionskandidaten (36) oder Kombinieren von zwei oder mehreren der Positionskandidaten (36),
**dadurch gekennzeichnet,**
**dass** die Position (32) des mindestens einen Pixels in dem an das Referenzeinzelbild (#0) angrenzenden Einzelbild (#1) durch Verketten der bekannten Position (30) des mindestens einen Pixels in dem Referenzeinzelbild (#0) mit einem optischen Verlauf von dem Referenzeinzelbild (#0) bis zu dem angrenzenden Einzelbild (#1) erzielt wird, und
**dass** die Position (32) des mindestens einen Pixels in dem Ankereinzelbild durch rekursives Ausführen der Schritte des Schätzens (22) und des Bestimmens (24) mit dem Ankereinzelbild, das als das aktuelle Einzelbild eingegeben wird, erzielt wird.

2. Verfahren nach Anspruch 1, wobei das mindestens eine Pixel eine Vielzahl von Pixeln umfasst, und wobei das Schätzen (22) und Bestimmen (24) unabhängig für jedes von dem mindestens einen Pixel ausgeführt werden.

3. Verfahren nach einem der Ansprüche 1 bis 2, wobei das mindestens eine Pixel eine dichte Auswahl von Pixeln des Videos umfasst.

4. Verfahren nach einem der Ansprüche 1 bis 3, wobei das aktuelle Einzelbild (#7) und die dazwischenliegenden Einzelbilder, die als Ankereinzelbilder (#3, #5, #6) dienen, in einer Richtung von dem aktuellen Einzelbild (#7) zu dem Referenzeinzelbild (#0), wahlweise logarithmisch, immer weiter voneinander beabstandet sind.

5. Verfahren nach einem der Ansprüche 1 bis 4, ferner umfassend das Bewerten (23) von jeweiligen Ergebnissen der Positionskandidaten (36) und das Bestimmen der Position des mindestens einen Pixels in dem aktuellen Einzelbild basierend auf den jeweiligen Ergebnissen.

6. Verfahren nach Anspruch 5, wobei das Ergebnis mindestens eines von einem Nicht-Sichtbarkeitsergebnis und einem Unsicherheitsergebnis umfasst.

7. Verfahren nach Anspruch 6, wobei mindestens eines von dem Nicht-Sichtbarkeitsergebnis und dem Unsicherheitsergebnis von einem maschinellen Lernmodell, wahlweise von einem neuronalen Faltungsnetzwerk, berechnet wird.

8. Verfahren nach Anspruch 6 oder 7, wobei das Bestimmen das Identifizieren eines Positionskandidaten (36) als einen unwahrscheinlichsten Positionskandidaten umfasst, falls das Nicht-Sichtbarkeitsergebnis des Positionskandidaten angibt, dass das mindestens eine Pixel in dem aktuellen Einzelbild (#7) oder in dem entsprechenden Ankereinzelbild (#3, #5, #6) nicht sichtbar ist.

9. Verfahren nach einem der Ansprüche 6 bis 8, wobei das Unsicherheitsergebnis basierend auf einem ersten Unsicherheitsergebnis der Position (32) des mindestens einen Pixels in dem jeweiligen Ankereinzelbild und einem zweiten Unsicherheitsergebnis des optischen Flusses (34) von dem jeweiligen Ankereinzelbild bis zu dem aktuellen Einzelbild (#7) berechnet wird.

10. System (10) zum Verfolgen mindestens eines Pixels von einem Referenzeinzelbild (#0) bis zu einem aktuellen Einzelbild (#7) in einem Video, welches das Referenzeinzelbild (#0), ein an das Referenzeinzelbild angrenzendes Einzelbild (#1), das aktuelle Einzelbild (#7) und mindestens ein dazwischenliegendes Einzelbild (#2-#6) zwischen dem an das Referenzeinzelbild (#0) angrenzenden Einzelbild (#1) und dem aktuellen Einzelbild (#7) umfasst, wobei das mindestens eine Pixel eine bekannte Position (30) in dem Referenzeinzelbild (#0) aufweist, wobei das System (10) umfasst:
- ein Schätzungsmodul (12) zum Schätzen einer Vielzahl von Positionskandidaten (36) für das mindestens eine Pixel in dem aktuellen Einzelbild (#7), wobei jeder der Positionskandidaten (36) durch Verketten einer Position (32) des mindestens einen Pixels in einem jeweiligen Ankereinzelbild mit einem optischen Verlauf (34) von dem jeweiligen Ankereinzelbild bis zu dem aktuellen Einzelbild (#7) erzielt wird, wobei für jeden der Vielzahl von Positionskandidaten ein anderes Ankereinzelbild (#0, #3, #5, #6) aus dem Referenzeinzelbild (#0), einem an das Referenzeinzelbild (#0) angrenzenden Einzelbild (#1) und dem mindestens einen dazwischenliegenden Einzelbild (#2-#6) gewählt wird; und
- ein Bestimmungsmodul (14) zum Bestimmen der Position des mindestens einen Pixels in dem aktuellen Einzelbild (#7) durch Auswählen eines der Positionskandidaten (36) oder Kombinieren von zwei oder mehreren der Positionskandidaten (36),
**dadurch gekennzeichnet,**
**dass** die Position (32) des mindestens einen Pixels in dem an das Referenzeinzelbild (#0) angrenzenden Einzelbild (#1) durch Verketten der bekannten Position (30) des mindestens einen Pixels in dem Referenzeinzelbild (#0) mit einem optischen Verlauf von dem Referenzeinzelbild (#0) bis zu dem angrenzenden Einzelbild (#1) erzielt wird, und
**dass** die Position (32) des mindestens einen Pixels in dem Ankereinzelbild durch rekursives Ausführen des Schätzens des Schätzungsmoduls (12) und des Bestimmens des Bestimmungsmoduls (14) erzielt wird, wobei das Ankereinzelbild als das aktuelle Einzelbild eingegeben wird.

11. Computerprogrammsatz, der Anweisungen umfasst, um die Schritte des Verfahren nach einem der Ansprüche 1 bis 9 auszuführen, wenn der Programmsatz von mindestens einem Computer ausgeführt wird.

12. Aufzeichnungsmedium, das durch mindestens einen Computer lesbar ist und auf dem mindestens ein Computerprogramm aufgezeichnet ist, das Anweisungen zum Ausführen der Schritte des Verfahrens nach einem der Ansprüche 1 bis 9 umfasst.

## Revendications

1. Procédé (20) mis en œuvre par ordinateur pour suivre au moins un pixel d'une image de référence (#0) à une image actuelle (#7) dans une vidéo comprenant l'image de référence (#0), une image (#1) adjacente à l'image de référence, l'image actuelle (#7) et au moins une image intermédiaire (#2 à #6) entre l'image (#1) adjacente à l'image de référence (#0) et l'image actuelle (#7), l'au moins un pixel ayant une position connue (30) dans l'image de référence (#0), le procédé (20) comprenant les étapes suivantes :
- estimer (22) une pluralité de positions candidates (36) de l'au moins un pixel dans l'image actuelle (#7), dans lequel chacune des positions candidates (36) est obtenue en concaténant une position (32) de l'au moins un pixel dans une image d'ancrage respective avec un flux optique (34) de l'image d'ancrage respective à l'image actuelle (#7), dans lequel, pour chacune de la pluralité de positions candidates, une image d'ancrage (#0, #3, #5, #6) différente est choisie parmi l'image de référence (#0), une image (#1) adjacente à l'image de référence (#0) et l'au moins une image intermédiaire (#2 à #6), et ;
- déterminer (24) la position de l'au moins un pixel dans l'image actuelle (#7) en sélectionnant une des positions candidates (36) ou en combinant deux des positions candidates (36) ou plus,
**caractérisé en ce que** la position (32) de l'au moins un pixel dans l'image (#1) adjacente à l'image de référence (#0) est obtenue en concaténant la position connue (30) de l'au moins un pixel dans l'image de référence (#0) avec un flux optique de l'image de référence (#0) à l'image (#1) adjacente, et
**en ce que** la position (32) de l'au moins un pixel dans l'image d'ancrage est obtenue en effectuant de manière récursive les étapes d'estimation (22) et de détermination (24) où l'image d'ancrage est entrée comme image actuelle.

2. Procédé selon la revendication 1, dans lequel l'au moins un pixel comprend une pluralité de pixels, et dans lequel l'estimation (22) et la détermination (24) sont effectuées indépendamment pour chacun du ou des pixels.

3. Procédé selon l'une quelconque des revendications 1 et 2, dans lequel l'au moins un pixel comporte une sélection dense de pixels de la vidéo.

4. Procédé selon l'une quelconque des revendications 1 à 3, dans lequel l'image actuelle (#7) et les images intermédiaires servant d'images d'ancrage (#3, #5, #6) sont espacées les unes des autres de manière croissante dans le sens allant de l'image actuelle (#7) à l'image de référence (#0), facultativement de manière logarithmique.

5. Procédé selon l'une quelconque des revendications 1 à 4, comprenant en outre l'évaluation (23) de scores respectifs des positions candidates (36), et la détermination de la position de l'au moins un pixel dans l'image actuelle sur la base des scores respectifs.

6. Procédé selon la revendication 5, dans lequel le score comprend au moins un parmi un score de non-visibilité et un score d'incertitude.

7. Procédé selon la revendication 6, dans lequel au moins un parmi le score de non-visibilité et le score d'incertitude est calculé par un modèle d'apprentissage machine, facultativement par un réseau neuronal convolutif.

8. Procédé selon la revendication 6 ou 7, dans lequel la détermination comprend l'identification d'une position candidate (36) comme étant une position candidate la moins probable si le score de non-visibilité de la position candidate indique que l'au moins un pixel n'est pas visible dans l'image actuelle (#7) ou dans l'image d'ancrage correspondante (#3, #5, #6).

9. Procédé selon l'une quelconque des revendications 6 à 8, dans lequel le score d'incertitude est calculé sur la base d'un premier score d'incertitude de la position (32) de l'au moins un pixel dans l'image d'ancrage respective et d'un deuxième score d'incertitude du flux optique (34) de l'image d'ancrage respective à l'image actuelle (#7).

10. Système (10) pour suivre au moins un pixel d'une image de référence (#0) à une image actuelle (#7) dans une vidéo comprenant l'image de référence (#0), une image (#1) adjacente à l'image de référence, l'image actuelle (#7) et au moins une image intermédiaire (#2 à #6) entre l'image (#1) adjacente à l'image de référence (#0) et l'image actuelle (#7), l'au moins un pixel ayant une position connue (30) dans l'image de référence (#0), le système (10) comprenant :
- un module d'estimation (12) pour estimer une pluralité de positions candidates (36) de l'au moins un pixel dans l'image actuelle (#7), dans lequel chacune des positions candidates (36) est obtenue en concaténant une position (32) de l'au moins un pixel dans une image d'ancrage respective avec un flux optique (34) de l'image d'ancrage respective à l'image actuelle (#7), dans lequel, pour chacune de la pluralité de positions candidates, une image d'ancrage (#0, #3, #5, #6) différente est choisie parmi l'image de référence (#0), une image (#1) adjacente à l'image de référence (#0) et l'au moins une image intermédiaire (#2 à #6), et ;
- un module de détermination (14) pour déterminer la position de l'au moins un pixel dans l'image actuelle (#7) en sélectionnant une des positions candidates (36) ou en combinant deux des positions candidates (36) ou plus,
**caractérisé en ce que** la position (32) de l'au moins un pixel dans l'image (#1) adjacente à l'image de référence (#0) est obtenue en concaténant la position connue (30) de l'au moins un pixel dans l'image de référence (#0) avec un flux optique de l'image de référence (#0) à l'image (#1) adjacente, et
**en ce que** la position (32) de l'au moins un pixel dans l'image d'ancrage est obtenue en effectuant de manière récursive l'estimation du module d'estimation (12) et la détermination du module de détermination (14) où l'image d'ancrage est entrée comme image actuelle.

11. Ensemble de programmes informatiques comportant des instructions pour exécuter les étapes du procédé selon l'une quelconque des revendications 1 à 9 lorsque ledit ensemble de programmes est exécuté par au moins un ordinateur.

12. Support d'enregistrement lisible par au moins un ordinateur, sur lequel est enregistré au moins un programme informatique comportant des instructions pour exécuter les étapes du procédé selon l'une quelconque des revendications 1 à 9.
